# EUROPEAN PATENT SPECIFICATION

(11) **EP 4 145 413 B1**
(45) Date of publication and mention of the grant of the patent: **24.12.2025**
(21) Application number: 22192284.2
(22) Date of filing: 26.08.2022
(51) Int. Cl.: G07C 9/10, G08B 13/181

(54) **ANTI-CLIMB SYSTEM**
ANTI-CLIMB-SYSTEM
SYSTÈME ANTI-SAUT

(30) Priority: 03.09.2021 GB 202112567
(43) Date of publication of application: 08.03.2023
(73) Proprietor: Integrated Design Limited, Feltham, Middlesex TW13 7EQ (GB)
(72) Inventor: Huff, Derek, Middlesex, TW13 7EQ (GB)
(74) Representative: Dolleymores

(56) References cited:
- GB-A- 2 549 782
- KR-A- 20180 085 337
- US-A1- 2018 174 426
- US-B2- 10 337 245

## Description

This invention relates to an anti-climb system.

Turnstiles are commonly used to control the movement of pedestrians and other traffic from one defined area into another. When they are motorised and they are sometimes referred to as "Speedgates". These usually have sensing systems such as infra-red beams, optical systems or other systems for detecting passage. Typically, they will comprise one or more moving barriers which move to physically block or allow pedestrian movement.

Often a token identifying a user is presented to a reader mounted on or near to the barriers and or biometric sensors are used. The reader or sensors are most often on the enclosure housing the barrier mechanism, which will extend outwards from the barrier or barriers, pairs of enclosures forming a channel through which users must pass. The moving barriers open to allow movement through said channel and close to prevent it.

Depending on the application and associated risk of intrusion the moving barriers may be of varying height to manage the risk of an unauthorised person climbing over them.

The space immediately in front of the barriers (ie before a person passes through the barriers) is often monitored by an optical system associated with security and barrier movement safety, so that an unauthorised person approaching the barrier in a closed position can be detected and an alarm signalled. This alarm may be in the form of an audible, visual or other indication in the vicinity of the barrier or provided to a remote location such as a location where security staff may be monitoring the security cameras.

The height of the enclosure is generally selected to provide a convenient height to present an access token at. It provides the mounting location for bearings supporting moving barriers and therefore cannot be very low because the resulting forces when the barriers are pushed will become difficult to contain. Typically, for a higher security Speedgate, the enclosure is perhaps around half the height of the moving barriers. However, this can vary.

Speedgate systems are often provided in entrance lobbies of buildings, typically with high ceilings, and indeed most often, for cost, practical and aesthetic reasons, there is a significant open space above the moving barriers. There is therefore a risk that a person can climb undetected over the barrier, for example by climbing onto the Speedgate enclosure and walking along it if the barrier is low, or using it as climbing aid to step over a higher barrier.

Various means have been implemented in the past to detect such an occurrence, including the use of pressure and load sensors to detect the weight and movement of an attacker, latterly directed inferred beams and so on.

In practice, pressure sensors are expensive and in some circumstances locating them on the barrier structure does not always provide a good balance between detection and false alarms.

Infrared beams can be used across the top of these moving barriers themselves, and have to be provided at a height which is unlikely to be triggered by the heads of pedestrians walking normally. However, such a method has limitations, including the need to place corresponding optical transmitters and receivers so that appropriate detection can be achieved. In addition, for a number of multiple Speedgates the alarm generated tends to not be specific to the particular Speedgate where the intrusion has occurred.

Ideally, detection is unique to the particular enclosure or enclosures involved so that any alarm triggered would identify the location of the attack so that, for example, a camera can be triggered to record the event.

Documents KR20180085337A and US10337245B2 disclose examples of known speed gates and turnstiles.

The present invention arose in an attempt to provide an improved system for detecting a climb attack on a turnstile.

According to the present invention there is provided Detection apparatus comprising a speedgate having a longitudinal direction parallel to the direction of passage of persons using the speedgate, and having a secure end and an insecure end; a Ranging Time-of-Flight (RTOF) sensor positioned at the secure end of the top surface of an enclosure of the speedgate to direct a single beam in a fixed direction towards the insecure end and angled upwards, and a processor arranged to register objects or persons crossing the beam at greater than a minimum distance from the sensor to detect a person who has climbed onto the speedgate enclosure at the insecure end.

Preferably the processor triggers an alarm if a person or object crosses the beam at a distance greater than or equal to said minimum or less than or equal to a maximum distance ranging from the ranging time-of-flight (RTOF) sensor.

A speedgate has a secure end and an insecure end. The insecure end is generally the end at which a person arrives (the entrance), and the secure end is generally the end from which they depart. The secure end will therefore usually be the end remote a doorway and leading to the inner areas of a building, access to which is controlled Thus the speedgate protects against unauthorised entry.

Thus the RTOF sensor is provided at or towards the secure side to direct an upwardly angled beam along the line of the speedgate towards its other end.

The RTOF sensor may alternatively be provided behind the front of the body in order to project upwardly angled beam along the length or at least part of the enclosure, or may be mounted a distance above the body.

A RTOF sensor can detect the distance an object which breaks the beam from it (ie by measuring the time-of-flight, phase change etc of light reflected from an object). Such sensors are commonly used in many environments. An alarm is triggered only after a certain minimum distance from the sensor then any false alarms such as the hand of an exiting user being placed upon the enclosure, or a bag being swung, can be ignored as the minimum range would generally be set such that the height of the beam at this minimum range above the enclosure is greater than the height at which a person may place a hand or a bag when in use.

A maximum value may also be set so that an object detected which could not be a person climbing on the enclosure is not detected because it was too far away.

By having a maximum value then this reduces the number of false alarms caused by, for example, a ceiling, light or fan fixture.

In a further aspect the invention provides a method of detecting whether a person is climbing upon a speedgate, comprising providing an apparatus as above, and generating an alarm if a person or object is registered at least a minimum distance from the RTOF sensor.

In a further aspect the invention provides a speegate provided with an anti-climb detection apparatus as described above.

The invention may further provide detection apparatus comprising a body having a longitudinal direction; a ranging time-of-flight sensor (LIDAR) positioned to direct a beam generally along at least part of the body and angled upwards, and a processor arranged to register objects or persons crossing the beam at greater than a minimum distance from the sensor to detect climbing on the body.

Embodiments of the invention will now be described, by way of example only, with reference to the accompanying diagrammatic drawings, in which;
Figure 1 shows a ranging Time-of-Flight (RTOF) sensor (LIDAR) transmitting a beam of light;
Figure 2 shows a Speedgate arrangement with a person walking on an enclosure;
Figure 3 shows a side view, and:
Figure 4 shows a plan view.

Ranging Time-of-Flight (RTOF) sensors (otherwise known as LIDAR) are used for a number of purposes, typically distance measuring. Generally they are used in a reflective mode in which a transmitter, which may be a laser, transmits a modulated single beam of light which strikes a target. The beam can be a very narrow diameter (they can be regarded as single pixel devices) and these are not cameras as such, ie they are not used for imaging, simply for distance measuring. However in some embodiments an RTOF sensor may have a larger or conical field of view. Some devices for example have a field of view half angle of around 10 degrees and integrate the perceived distance over the field of view. Any RTOF sensor can be used in embodiments of the invention.

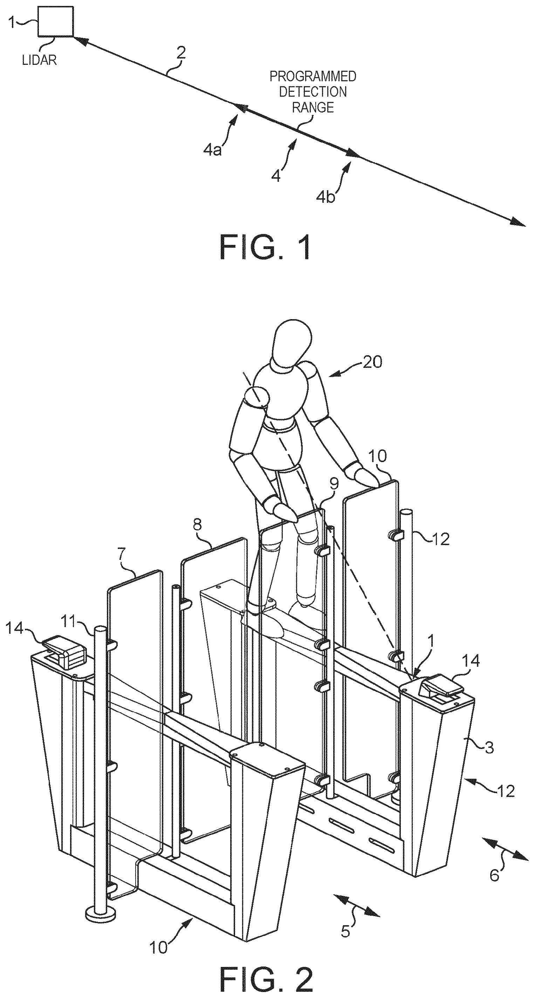

Some of the beam of light, after it strikes a target, returns to a receiver on the RTOF and the time taken for the optical journey is used as a measure of the distance travelled. Thus, referring to Figure 1, a RTOF/LIDAR 1 transmits a beam 2. A person or other object breaking the beam causes reflection of this and thus, since the RTOF can measure the time taken for the optical journey of the light back and forth, a determination can be made of the distance that person or other object was from the sensor 1.

In embodiments of the invention, the sensor is controlled by a processor (which may be part of the sensor itself or a separate unit connected to it) 3 within an enclosure of Figure 2, but this may be at any convenient location.

This is used to set a minimum and, optionally, a maximum distance at which an object is detected, or at least at which a detected object is registered. This is shown as Zone 4 in Figure 1 such that only persons or other objects which reflect the beam and are at a distance between minimum distance 4a and maximum distance 4b will register. This can be used to trigger an alarm in many different ways, and any person or object that reflects the beam at a distance closer than 4a or further away from 4b will not register and therefore not cause an alarm to be triggered. The Zone 4, and therefore, minimum and/or maximum distances 4a and 4b may of course be chosen at will and may vary and be variable.

Figure 2 shows a Speedgate arrangement having at least two passageways 5, 6. The invention may of course be used on arrangements having just one passageway. These are protected by moveable barriers 7 to 10 which can rotate about vertical axes, in order to open them or close them in conventional manner. The axes at each side, such as the end ones 11, 12, comprise a shaft driven by a motor and elements such as gearing, brakes and a control apparatus will typically be part of these.

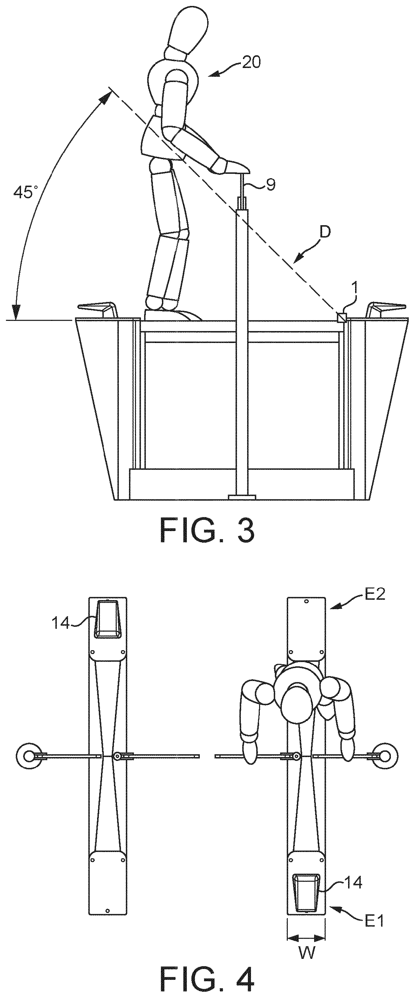

As shown, the Speedgate includes enclosures 10, 12 which generally define the passageways protected by the barrier, such as passageways 5 and 6, and comprise plinths or other bodies which may mount electric control circuitry. The top of these enclosures will have a certain width W as shown most clearly in the plan view of Figure 4. A card reader or other token reader 14 is mounted on each enclosure. Alternatively, or additionally, this may be a biometric sensor such as a fingerprint reader, or otherwise.

An RTOF sensor is mounted on the top of the secure side of a Speedgate enclosure 12, as is shown most clearly in Figure 3. This is then arranged to transmit an upwardly angled beam which points towards the insecure side, as shown in Figures 2 and 3, generally along the line of the enclosure. As indicated, this may be angled upwards at 45º, but the angle may be different. It will, however, not be vertical.

As is shown in Figures 2 and 3 this can then illuminate an attacker 20 who has climbed onto the enclosure at the insecure end for the purpose of gaining entry by climbing over the gates. This attacker can be detected by the system noting that the beam, which is a narrow diameter beam from the sensor 1, is reflected back to the sensor. The distance of the attacker can also be detected in standard manner.

In addition to simply detecting the attacker, further processing is utilised to only register or be concerned with a target if it is a minimum distance, say nominal distance D from the RTOF sensor 1. The attacker may also be ignored if they are beyond a certain maximum distance (shown by 4b in Figure 1).

This can significantly reduce false alarms in that any temporary accidental obstruction of the transmitted beam by someone legitimately walking through the passageway or lane and breaking the beam by virtue of putting their hand outside the lane, swinging a bag or other object and so on, is ignored because the hand, bag and so on would generally be at a relatively low height.

Thus, only an attacker actually climbing on the enclosure will be registered. This can be used to trigger an alarm locally at the Speedgate and/or an alarm signal can be sent to a remote location where it can be viewed by an observer, logged and so on. An alarm may be visual, audible, haptic and/or in the form of a signal sent to other local or remote apparatus. An alarm may be used to instigate operation of a monitoring camera.

The secure end of the barrier is shown by reference E1.

As the system is a reflective one it has the great advantage that a hard to site receiver is not required and any object illuminated at an irrelevant distance can be ignored because its distance is known. Thus, by providing the minimum and, optionally, maximum distances (ie a gated distance) it can be established with a high degree of accuracy that an attacker is trying to gain access by climbing on the apparatus.

The beam will be directed generally in the line of the enclosure, either along its longitudinal access or at such an angle that most of the beam between the front end E1 and rear end E2 of the enclosure is over the lateral extent of the enclosure.

If the transmitted beam is permanently blocked in such a way that an alarm is not caused then the sensor can be effectively disabled and, subject to the status of the Speedgate, an alarm may be actuated, either audible or visual as desired. A small delay or other processing may be built in to allow for momentary obstruction caused by legitimate reasons, eg card presentation.

RTOF sensors may be used on all of the enclosures if desired. Typically, they will be mounted at or towards the secure side E1 of the gate and facing towards the insecure side. By secure side is meant the protected area, or 'IN', or the side which a security token is required to pass to. Very often a token is not required to exit

In other embodiments, the sensor need not be mounted directly upon the enclosure or gate but may be mounted in such a position that the beam still extends in any angled upwards direction along and above the part to be protected. It may alternatively be mounted above the enclosure to still transmit a beam which is angled upwards, in which case it will preferably be mounted at a height which is above a height by which a user would normally put their hand or a bag in normal traverse through the passageway.

The sensor may be placed at any position along the enclosure, though desirably it is at or towards one end thereof.

Typically, the minimum distance 4a will be 50cm and the maximum distance 4b, will be 150cm but this can vary. It may depend on the length of the enclosure/pedestal and the mounting position of the sensor.

By tracking the signals detected by the RTOF sensor, direction of movement can be sensed. Thus, in some embodiment the direction of any movement can detect an object or person, to further discriminate against false alarms, can be sensed.

In some embodiments one or more timers may be used so that, for example. a benign momentary obstruction by the hand of someone exiting from the secure side blocking the beam at short range does not cause an alarm. A timer can also be associated with the ranged detection of a climber such that a benign object like a raised hand momentarily breaking the beam in the alarm detection range will not cause an alarm if this occurs within a certain time period.

Thus in some embodiments, detection of a climb attack and/or a malicious obstruction includes processing which can look not just at an instantaneous signal but also to look for a signatures in a sequence of signals over time (eg to detect movement and direction of movement) to further discriminate between a genuine climb attack, malicious obstruction of the sensor and other events which may or may or be non-alarm, ie benign, events.

The invention can be used to protect other types of arrangements or constructions from climbing attacks, such as walls, fences, or others, by placing an RTOF sensor at an appropriate position to angle its beam upwards.

## Claims

1. A detection apparatus comprising a speedgate having a longitudinal direction parallel to the direction of passage of persons using the speedgate, and having a secure end and an insecure end; a Ranging Time-of-Flight (RTOF) sensor positioned at the secure end of the top surface of an enclosure of the speedgate to direct a single beam in a fixed direction towards the insecure end and angled upwards, and a processor arranged to register objects or persons crossing the beam at greater than a minimum distance from the sensor to detect a person who has climbed onto the enclosure of the speedgate at the insecure end.

2. A detection apparatus as claimed in claim 1 wherein the processor forms part of the RTOF sensor.

3. A detection apparatus as claimed in any preceding claim wherein objects or persons at less or equal to said minimum distance, or greater than a maximum distance from the sensor are not registered.

4. A detection apparatus as claimed in claim 3 wherein an alarm is triggered if a person or object crosses the beam at a distance greater than or equal to the minimum or less than or equal to the maximum distance from the RTOF sensor.

5. A detection apparatus as claimed in any one of claims 1 to 4 wherein the RTOF sensor is provided behind the front of the body in order to project an upwardly angled beam along the length or part of the length of the body.

6. A detection apparatus as claimed in any preceding claim wherein a plurality of bodies in a parallel arrangement are protected by a plurality of RTOF sensors.

7. A detection apparatus as claimed in any preceding claim including a timer.

8. A detection apparatus as claimed in any preceding claim, adapted to measure distance over time to sense movement and/or direction of movement.

9. A detection apparatus as claimed in claim 8, configured to detect a sequence of signals over time and to discriminate between malicious and benign events,

10. A method of detecting whether a person is climbing upon a speedgate, comprising providing a detection apparatus as claimed in any of claims 1 to 9 and generating an alarm if a person or object is registered at least at said minimum distance from the RTOF sensor.

11. A method as claimed in claim 10 wherein the alarm is only generated if a person or object is detected at greater than or equal to said minimum distance and less than or equal to a maximum distance from the RTOF sensor.

## Patentansprüche

1. Erkennungsvorrichtung, umfassend ein Speedgate, aufweisend eine Längsrichtung parallel zu der Richtung eines Durchtritts von Personen, die das Speedgate benutzen, und aufweisend ein sicheres Ende und ein unsicheres Ende; einen Time-of-Flight-Entfernungsmessungssensor (RToF-Sensor), der an dem sicheren Ende der oberen Fläche einer Einfassung des Speedgates positioniert ist, um einen einzigen Strahl in eine festgelegte Richtung zu dem unsicheren Ende hin und nach oben abgewinkelt zu lenken, und einen Prozessor, der dazu angeordnet ist, Objekte oder Personen, die den Strahl in größer als einer minimalen Entfernung von dem Sensor durchqueren, zu registrieren, um eine Person zu erkennen, die auf die Einfassung des Speedgates an dem unsicheren Ende geklettert ist.

2. Erkennungsvorrichtung nach Anspruch 1, wobei der Prozessor einen Teil des RToF-Sensors bildet.

3. Erkennungsvorrichtung nach einem vorhergehenden Anspruch, wobei Objekte oder Personen in kleiner als oder gleich der besagten minimalen Entfernung oder größer als einer maximalen Entfernung von dem Sensor nicht registriert werden.

4. Erkennungsvorrichtung nach Anspruch 3, wobei ein Alarm ausgelöst wird, wenn eine Person oder ein Objekt den Strahl in einer Entfernung durchquert, die größer als oder gleich der minimalen oder kleiner als oder gleich der maximalen Entfernung von dem RToF-Sensor ist.

5. Erkennungsvorrichtung nach einem der Ansprüche 1 bis 4, wobei der RToF-Sensor hinter der Vorderseite des Körpers vorgesehen ist, um einen nach oben abgewinkelten Strahl entlang der Länge oder eines Teils der Länge des Körpers zu projizieren.

6. Erkennungsvorrichtung nach einem vorhergehenden Anspruch, wobei eine Vielzahl von Körpern in einer parallelen Anordnung durch eine Vielzahl von RToF-Sensoren geschützt ist.

7. Erkennungsvorrichtung nach einem vorhergehenden Anspruch, einschließend einen Timer.

8. Erkennungsvorrichtung nach einem vorhergehenden Anspruch, die dazu eingerichtet ist, eine Entfernung im Zeitablauf zu messen, um eine Bewegung und/oder eine Bewegungsrichtung zu erfassen.

9. Erkennungsvorrichtung nach Anspruch 8, die dazu konfiguriert ist, eine Abfolge von Signalen im Zeitablauf zu erkennen und zwischen böswilligen und gutwilligen Ereignissen zu unterscheiden.

10. Verfahren zur Erkennung, ob eine Person auf ein Speedgate klettert, umfassend ein Bereitstellen einer Erkennungsvorrichtung nach einem der Ansprüche 1 bis 9 und ein Erzeugen eines Alarms, wenn eine Person oder ein Objekt in mindestens der besagten minimalen Entfernung von dem RToF-Sensor registriert wird.

11. Verfahren nach Anspruch 10, wobei der Alarm nur erzeugt wird, wenn eine Person oder ein Objekt in größer als oder gleich der besagten minimalen Entfernung und kleiner als oder gleich einer maximalen Entfernung von dem RToF-Sensor erkannt wird.

## Revendications

1. Appareil de détection comprenant un portail rapide ayant une direction longitudinale parallèle à la direction de passage des personnes utilisant le portail rapide, et ayant une extrémité sécurisée et une extrémité non sécurisée ; un capteur de temps de vol à distance (RTOF) positionné au niveau de l'extrémité sécurisée de la surface supérieure d'une enceinte du portail rapide pour diriger un faisceau unique dans une direction fixe vers l'extrémité non sécurisée et inclinée vers le haut, et un processeur agencé pour enregistrer des objets ou des personnes traversant le faisceau à une distance supérieure à une distance minimale du capteur pour détecter une personne qui a grimpé sur l'enceinte du portail rapide au niveau de l'extrémité non sécurisée.

2. Appareil de détection selon la revendication 1 dans lequel le processeur fait partie du capteur RTOF.

3. Appareil de détection selon l'une quelconque des revendications précédentes dans lequel les objets ou les personnes à une distance inférieure ou égale à ladite distance minimale, ou supérieure à une distance maximale du capteur ne sont pas enregistrés.

4. Appareil de détection selon la revendication 3 dans lequel une alarme est déclenchée si une personne ou un objet traverse le faisceau à une distance supérieure ou égale à la distance minimale ou inférieure ou égale à la distance maximale du capteur RTOF.

5. Appareil de détection selon l'une quelconque des revendications 1 à 4 dans lequel le capteur RTOF est fourni derrière l'avant du corps afin de projeter un faisceau incliné vers le haut sur la longueur ou une partie de la longueur du corps.

6. Appareil de détection selon l'une quelconque des revendications précédentes dans lequel une pluralité de corps dans un agencement parallèle sont protégés par une pluralité de capteurs RTOF.

7. Appareil de détection selon l'une quelconque des revendications précédentes incluant un minuteur.

8. Appareil de détection selon l'une quelconque des revendications précédentes, conçu pour mesurer la distance dans le temps afin de détecter le mouvement et/ou la direction du mouvement.

9. Appareil de détection selon la revendication 8, configuré pour détecter une séquence de signaux dans le temps et pour faire la distinction entre des événements malveillants et bénins.

10. Procédé pour détecter si une personne est en train de grimper sur un portail rapide,
comprenant la fourniture d'un appareil de détection selon l'une quelconque des revendications 1 à 9 et
la génération d'une alarme si une personne ou un objet est enregistré au moins à ladite distance minimale du capteur RTOF.

11. Procédé selon la revendication 10 dans lequel l'alarme est déclenchée uniquement si une personne ou un objet est détecté à une distance supérieure ou égale à ladite distance minimale et inférieure ou égale à une distance maximale du capteur RTOF.
